# EUROPEAN PATENT APPLICATION

(11) **EP 1 918 840 A2**
(43) Date of publication of application: **07.05.2008**
(21) Application number: 07020416.9
(22) Date of filing: 18.10.2007
(51) Int. Cl.: G06F 21/00

(54) **Method for enhancing DRM authority, enhanced DRM authority content, and portable terminal using the same**

(30) Priority: 03.11.2006 KR 20060108107
(71) Applicant: Samsung Electronics Co., Ltd., Yeongtong-gu Suwon-si, Gyeonggi-do (KR)
(72) Inventor: Han, Kyu Hui, Samsung Electronics Co., Ltd., Suwon-si Gyeonggi-do (KR); Choi, Tae Hwa, c/o Samsung Electronics Co., Ltd., Suwon-si Gyeonggi-do (KR)
(74) Representative: Lang, Johannes

(57) **Abstract**

A method for enhancing a Digital Rights Management (DRM) authority, a content having an enhanced DRM authority and a portable terminal using the same. Reproduction of divisional regions of the content is prevented when a corresponding count value is equal to a permitted maximum number of reproductions. The DRM authority includes: reproducing DRM content having a first division region to an n^{th} division region, where n is a natural number; and changing a first count value to an n^{th} count value according to reproduction of the DRM content, wherein the count value limits a number of reproduction times of the DRM content for the corresponding division region. A variety of parameters can be set for each individual region to change the count value.

## Description

### BACKGROUND OF THE INVENTION

### Field of the invention

The present invention relates generally to a method for enhancing a Digital Rights Management (DRM) authority based on a timed duration of use, with an enhanced DRM authority content, and a portable terminal using the same. More particularly, the present invention relates to a method which can prevent a user from the unlimited reproduction of content shorter than a certain time duration by enhancing a DRM authority, and a portable terminal using the same.

### Description of the Related Art

The technology of Digital Rights Management (hereinafter referred to as DRM) is one which continuously manages and protects intellectual property rights of digital content using an encryption scheme. That is, the DRM technology is used to safely provide a user with various types of content from a Content Provider (CP), and prevents the user from performing unauthorized distribution of the content provided.

Such DRM technology can protect information throughout the processes of generation, distribution, and usage until abandonment of the digital content, including usage and rights offline, as well as online, according to user's rights.

In the meantime, in order to access and use the content applied with the DRM technology (hereinafter referred to as a DRM content) in a portable terminal, first, the user of the portable terminal typically connects to a content providing server providing the corresponding DRM content and downloads the DRM content, meta data corresponding to the DRM content and a license. Here, meta data refers to data storing information about the DRM content, and the license is data for indicating a decoding key used for decoding the encrypted content and the usage authority of the content (e.g. the number of times and terms of usage).

Through the above process, the DRM content and license are typically first stored in the portable terminal, which then permits the user to use the DRM content.

At the present, the user can use the DRM content within usage authority rules set forth in the license. For examples, the usage authority in the license is classified into a limitation of the number of times the content can be executed, and a limitation of the duration of an execution term, which can be a type of expiration date, or the like.

In particular, in the case wherein the number of times the content can be executed, the usage authorities in the license is limited because when the number of execution times of the DRM content is equal to or greater than a preset number, the user can no longer execute the DRM content. In the case that the execution term among the usage authorities in the license is limited, when the usage term of the user's DRM content exceeds a preset term in the license (such as a period of time, days, weeks, months, etc.), the user cannot execute the DRM content.

However, limitations regarding of the number times the content may be executed is problematic in that usage of a partial content of the full DRM content can be repeated again and again without limit. Specifically, in recognizing the number of execution times of the DRM content, the conventional usage authority of the limitation of the number of execution times employs a scheme in which the number of execution times is increased only when the DRM content has been reproduced longer than a preset time duration. According to such a scheme, if a user reproduces the DRM content less than the preset time duration and terminates the reproduction of the DRM content before the preset time duration passes, the user can repeatedly use or reproduce a part of the DRM content without limit. Considering that it is necessary to allocate a greater time duration sufficient to induce the user's interest in agreeing to such a license, the aforementioned problem becomes an inevitable dilemma.

### SUMMARY OF THE INVENTION

Accordingly, the present invention has been made in part to solve at least some of the above-mentioned problems occurring in the prior art. The present invention provides a method for enhancing DRM authority based on a durational time of use license, an enhanced DRM content, and a portable terminal using the same, which can prevent a user from unlimitedly repeating reproduction of a content somewhat shorter than a certain time duration that would count and reduce the remaining quantity of times that the content may be accessed.

In accordance with an exemplary aspect of the present invention, there is provided a method for enhancing DRM authority, the method including: reproducing a DRM content having a first division region to an n^{th} division region, wherein n is a natural number; changing a first count value to an n^{th} count value according to reproduction of the DRM content, wherein each first count value to the n^{th} count value has a permitted number of reproduction times in order to limit a number of times by which reproduction is permitted for a corresponding division region; and preventing reproduction of the corresponding division region when a corresponding count value of the corresponding division region from among the first count value to the n^{th} count value is equal to the permitted maximum number of reproduction times.

In accordance with another exemplary aspect of the present invention, there is provided an enhanced DRM authority content including: a DRM content divided into a first division region to an n^{th} division region, where n is a natural number; and a license limiting a number of reproduction times of the DRM content, wherein the license includes: a first count value to an n^{th} count value having a first permitted number of reproduction times to an n^{th} permitted number of reproduction times, which designates the number of times up to which the first division region to the n^{th} division region of the DRM content can be reproduced, respectively; a first reference time duration to an n^{th} reference time duration serving as reference values for reproduction time duration in order to change the first count value to the n^{th} count value for the first division region to the n^{th} division region of the DRM content, respectively; and a first used time duration to an n^{th} used time duration increasing a corresponding count if an accumulated used time duration obtained by accumulating the reproduction time durations for which the first division region to the n^{th} division region of the DRM content are partially reproduced less than the reference time duration is equal to or greater than the reference time duration.

In accordance with another exemplary aspect of the present invention, there is provided an enhanced DRM authority content including: a DRM content divided into a first division region to an n^{th} division region, where n is a natural number; and a license limiting a number of reproduction times of the DRM content, wherein the license includes: a first count value to an n^{th} count value having a first permitted number of reproduction times to an n^{th} permitted number of reproduction times, which designates the number of times up to which the first division region to the n^{th} division region of the DRM content can be reproduced, respectively; and a first reference time duration to an n^{th} reference time duration serving as reference values for reproduction time duration in order to change the first count value to the n^{th} count value for the first division region to the n^{th} division region of the DRM content, respectively.

In accordance with another exemplary aspect of the present invention, there is provided an enhanced DRM authority content including: a DRM content having a first division region to an n^{th} division region; and a license limiting a number of reproduction times up to which the first division region to the n^{th} division region of the DRM content can be reproduced.

In accordance with another exemplary aspect of the present invention, there is provided a portable terminal including: a radio frequency unit for receiving a DRM content having a first division region to an n^{th} division region, where n is a natural number, and a license limiting a number of reproduction times of the DRM content from an external; a key input unit for generating a key signal for receiving and reproducing the DRM content; a memory for storing the DRM content and the license; a display unit for displaying an image and an audio processor for reproducing an audio signal according to a reproduction of the DRM content; and a controller for controlling to reproduce the DRM content by activating a division region of the DRM content when the number of reproduction times of the content is less than a permitted number of reproduction times based on the license.

Details of other exemplary embodiments are incorporated in the following description and attached drawings.

### BRIEF DESCRIPTION OF THE DRAWINGS

The above and other exemplary aspects, features and advantages of the present invention will be more apparent from the following detailed description taken in conjunction with the accompanying drawings, in which:
FIG. 1 is a schematic diagram illustrating a DRM content service system for a portable terminal to receive a DRM content and license according to an exemplary embodiment of the present invention;
FIG. 2 is a conceptual diagram illustrating a license topology of an enhanced DRM authority content according to an exemplary embodiment of the present invention;
FIG. 3 illustrates an example of the license topology of an enhanced DRM authority content of FIG. 2;
FIG. 4 is a flowchart illustrating a method of enhancing a DRM authority according to another exemplary embodiment of the present invention;
FIG. 5 is a block diagram illustrating a configuration of a portable terminal using an enhanced DRM authority content according to an exemplary embodiment of the present invention; and
FIG. 6 is a flowchart of illustrating a method of using an enhanced DRM authority content in a portable terminal according to yet another exemplary embodiment of the present invention.

### DETAILED DESCRIPTION OF THE INVENTION

Hereinafter, exemplary embodiments of the present invention are described in detail with reference to the accompanying drawings. The same reference numbers are used throughout the drawings to refer to the same or like parts. Detailed descriptions of constructions or processes incorporated herein that are known in the art may be omitted to avoid obscuring the subject matter of the present invention with discussion of such known constructions and processes.

A person of ordinary skill in the art can understand and appreciate that terminologies used in the following description and the claims are based on the principle that the inventor can properly define terminologies in order to best define the invention. In addition, the construction shown and described herein corresponds only to exemplary embodiments of the present invention, and does not include the entire technological idea of the present invention within the scope of the appended claims. Various changes or modifications of the embodiments are possible without departing from the spirit and scope of the invention.

The present invention proposes a method for enhancing a Digital Rights Management (DRM) authority and a portable terminal using the same. In other words, according to the exemplary embodiments of the present invention, an entire DRM content is typically divided into a plurality of division regions, an offset is put at a beginning point of each division region, and then the number of execution times of each division region is counted, so that the limitation of the number of execution times for the reproduction of the entire DRM content can be applied to the division regions of the DRM content. It is also within the spirit and scope of the invention that an offset can be arranged at other portions of each division region, at some but not all division regions, or a separate table may be provided that is updated.

Hereinafter, exemplary embodiments of the present invention are described with reference to the accompanying drawings.

As used herein, the portable terminal performing a function according to an exemplary embodiment of the present invention refers to a mobile communication terminal. However, the present invention is not limited thereto.

In an exemplary embodiment of the present invention there are terminals disclosed that are capable of using a DRM content, which includes any and all devices for information communications, including but in no way limited to multimedia devices, and applications thereof, such as a game terminal, a mobile communication terminal using a Multimedia Message Service (MMS) or a multi-mail service, a mobile phone, a wired/wireless phone, a Personal Digital Assistant (PDA), a smart phone, an International Mobile Telecommunication 2000 (IMT-2000) terminal, a Digital Multimedia Broadcasting (DMB) terminal, a Wideband Code Division Multiple Access (WCDMA) terminal, a portable Internet terminal, etc.

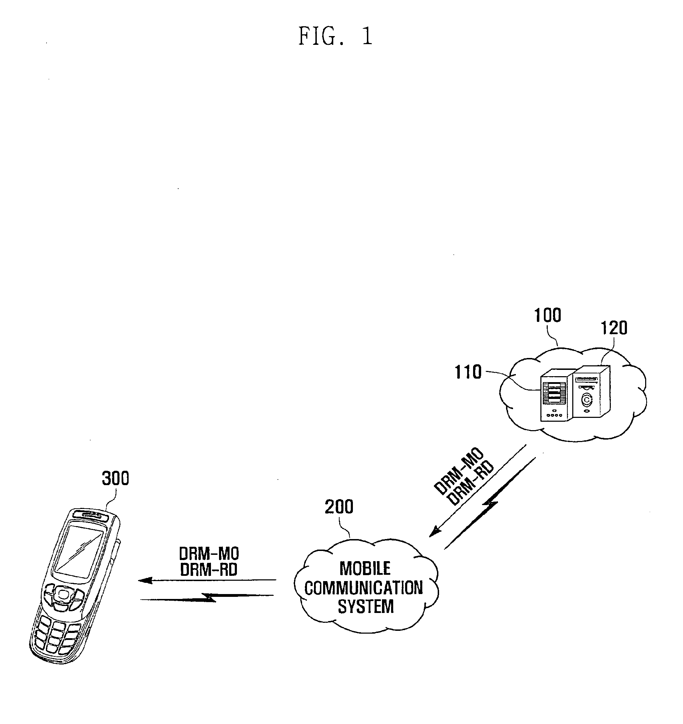

FIG. 1 is a schematic diagram illustrating a DRM content service system in which a portable terminal receives a DRM content and a license according to an exemplary embodiment of the present invention.

Referring to FIG. 1, the DRM content service system for a portable terminal according to an exemplary embodiment of the present invention typically includes a DRM content server 100, a mobile communication system 200, and the portable terminal 300.

When the portable terminal 300 connects to the DRM content server 100 through the mobile communication system 200, the DRM content service system then downloads a DRM content (DRM_MO) provided from the DRM content server 100, to the portable terminal 300.

The DRM content server 100 typically includes a content providing server 110 providing the DRM content (DRM_MO) to the portable terminal 300 and a license server 120 providing a license (DRM_RO) necessary for setting an authority of the DRM content (DRM_MO) so that the content can be accessed by the portable terminal 300. The DRM_RO may comprise a license means for limiting reproduction of one or more division regions of the DRM content.

When the portable terminal 300 requests a specific DRM content (DRM_MO) through the mobile communication system 200, the content providing server 110 provides the requested DRM content (DRM_MO) and additional data encrypted by using the DRM scheme to the portable terminal 300 through, for example, streaming or downloading. Here, the additional data provided together with the DRM content (DRM_MO) includes the meta data having an additional explanation of the corresponding DRM content (DRM_MO), and meta data interpretation module information provided in case in without the presence of a meta data interpretation module for interpreting the meta data.

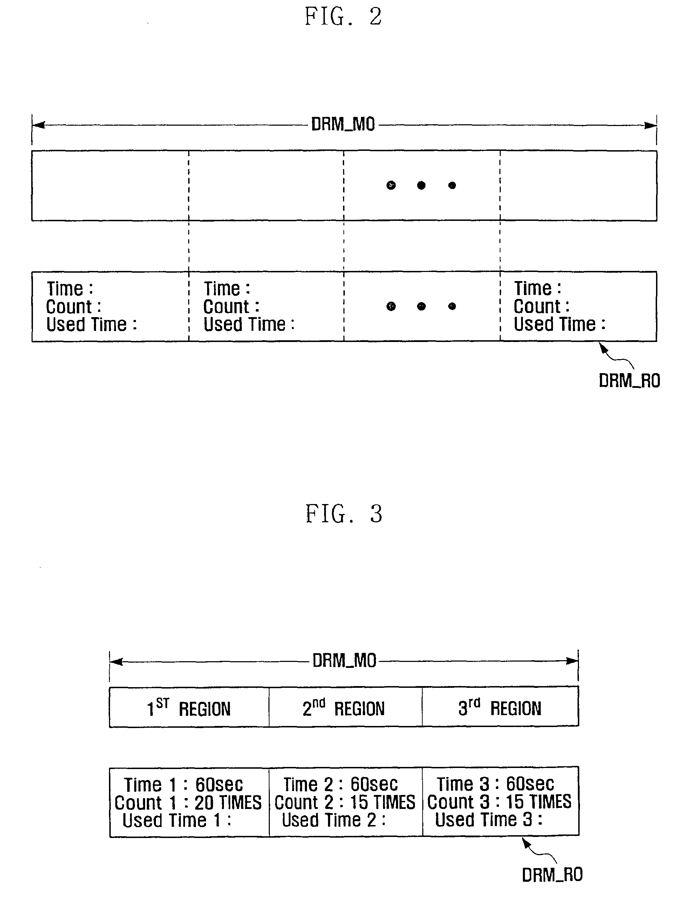

Still referring to FIG. 1, the license server 120 provides the license (DRM_RO) that permits the functionality of a user accessing the DRM content (DRM_MO), which is important in the instance when the DRM content (DRM_MO) provided from the content providing server 110 and the license (DRM_RO) (limiting the authority of the DRM content (DRM_MO)) are distributed separately. When the content providing server 110 provides the DRM content (DRM_MO), the license server 120 may provide a license package including the license (DRM_RO) corresponding to the DRM content (DRM_MO), or may separately distribute the license (DRM_RO) corresponding to the DRM content (DRM_MO). A license topology according to the present invention is described later with reference to FIGs. 2 to 4, and the present invention may operate, for example, with concurrent or separate distribution. The license can be distributed before the content, included with the content, subsequent to providing the content, or separately. In any case, the license permits an authorized user to access the desired content.

The mobile communication system 200 establishes a mobile communication channel with the portable terminal 300, and establishes a mobile communication channel with the content providing server 110, for example, by using a Wireless Access Protocol (WAP) or a web, thereby supporting access to the content providing server 110 by the portable terminal 300. To this end, the mobile communication system 200 may include a base station, a base station controller, a switcher, a WAP gateway, and an Internet interface or the like.

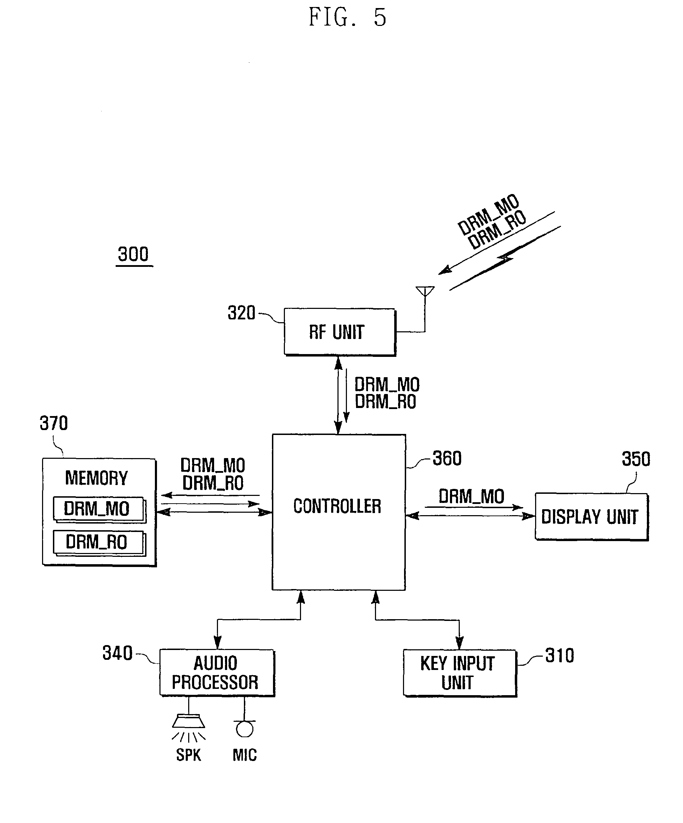

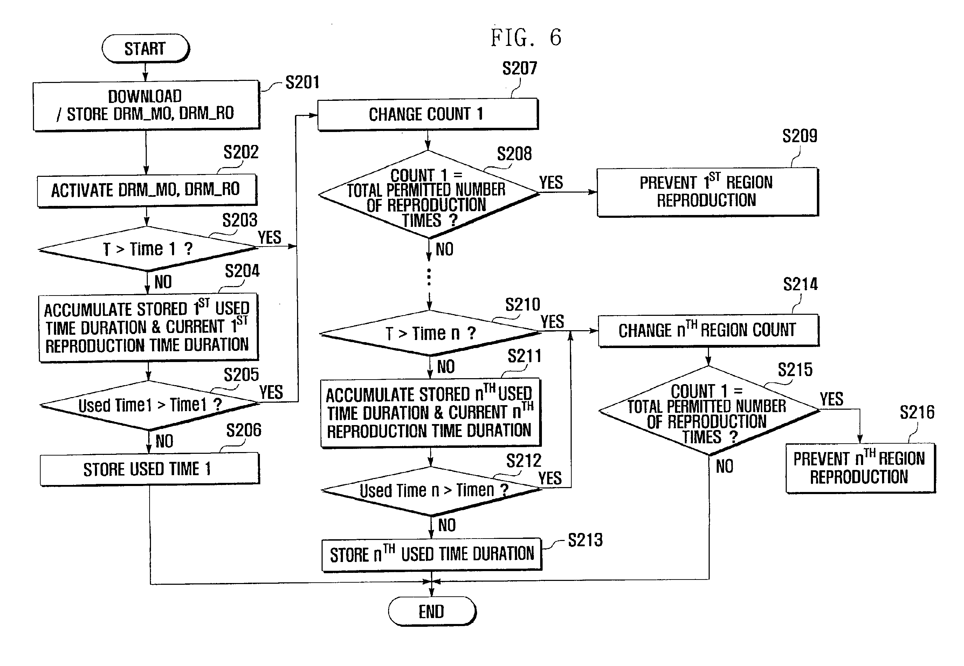

The portable terminal 300 connects to the content providing server 110 through the mobile communication system 200. After connection has been established, the portable terminal 300 may either download the DRM content (DRM_MO) including the license (DRM_RO), or download the DRM content (DRM_MO) excluding the license (DRM_RO) and then separately download the license (DRM_RO) from the content providing server 110. Details regarding a example of a portable terminal 300 and an exemplary operational method thereof are subsequently described herein with reference to FIGs. 5 and 6.

FIG. 2 illustrates an example of a license topology of an enhanced DRM authority content according to the present invention.

Referring to FIG. 2, according to an example of a license topology of an enhanced DRM authority content according to the present invention, a DRM content (DRM_MO) is divided into multiple division (i.e. multiply divided) regions and a number of reproduction times is designated to each division region (which, is a quantity of permissible reproductions of a particular division region, so as to prevent a user of the portable terminal 300 from reproducing a division region which has been reproduced equal to or greater than the designated number of reproduction times through use of the DRM content (DRM_MO). In other words, once the number of permissible reproductions of the particular division region has been region, no further reproductions are permitted.

With regard to the above-described reproductions times, the license (DRM_RO) limiting access to the DRM content (DRM_MO) may include three parameters including time duration (Time), count (Count), and used (i.e. "usage") time duration (Used Time).

For example, still referring to FIG. 2, the time duration parameter (Time) refers to a reproduction time duration of one reproduction of the DRM content (DRM_MO) of the corresponding content region, and serves as a reference time duration in order to determine a total number of reproduction times, and thereby change the count parameter, i.e. increase or reduce the count parameter.

The count parameter (Count) refers to a current number of times that the DRM content (DRM_MO) of the corresponding content region has been reproduced. When the DRM content (DRM_MO) is reproduced for a time duration equal to or greater than the reproduction reference time duration set in the time parameter, the count is changed, i.e. decreased or increased.

Still referring to FIG. 2, the used time duration parameter (Used Time) refers to a current accumulated reproduction time duration for which the DRM content (DRM_MO) of the corresponding region has been reproduced, and changes the count parameter when the reproduction time duration is equal to or greater than the time duration parameter.

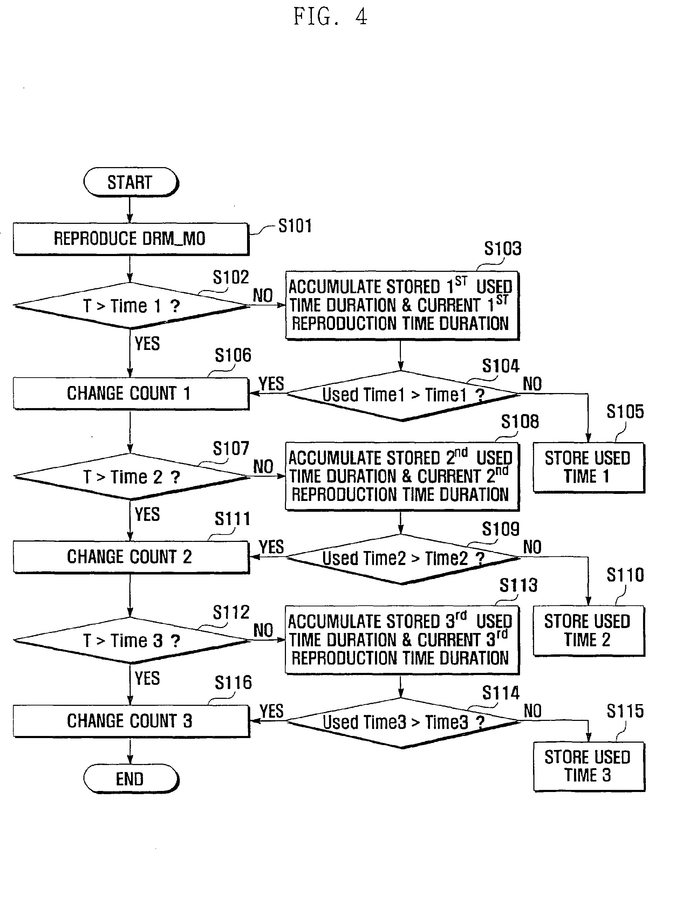

The license (DRM_RO) topology of an enhanced DRM authority content (DRM_MO) of FIG. 2 is illustrated in the examples shown in FIGs. 3 and 4.

FIG. 3 illustrates one example of the license topology of an enhanced DRM authority content of FIG. 2 according to the present invention.

In the example of FIG. 3, the entire DRM content (DRM_MO) of the present invention is divided into three regions comprising a first region, a second region and a third region.The license (DRM_RO) having parameters in the divided region is applied thereto. Here, it is explained that the DRM content is divided into three regions, however, it is not limited thereto and may be varied. That is, the DRM content (DRM_MO) according to the exemplary embodiment of the present invention can be divided into a greater or lesser number of division regions according to the length of the content, a characteristic of the content, a sale policy of a seller or the like. It is also within the spirit and scope of the invention that the content one or more of the division regions can be further subdivided.

Now referring to FIG. 3, in the license (DRM_RO) of the DRM content (DRM_MO), parameters included throughout the entire DRM content (DRM_MO) are time duration (Time), count (Count), and used time duration (Used Time) parameters. A person of ordinary skill in the art will appreciate that while it is preferable to use all the listed parameters, some or only one of the parameters can be used. It is also within the spirit and scope of the invention that the parameters could change or increase/decrease in quantity or be substituted for different parameters depending upon the particular region.

Still referring to FIG. 3m a first time duration to a third time duration (Time 1, Time 2, and Time 3), which in this example correspond to the 1^{st}, 2^{nd} and 3^{rd} regions, indicate time durations in which a first count to a third count (Count 1, Count 2, and Count 3) of the first region to the third region change, respectively. When the sum of a complete reproduction time duration and a partial reproduction time duration for any region is equal to or greater than the corresponding time duration (Time 1, Time 2, or Time 3), the first time duration to the third time duration (Time 1, Time 2, or Time 3) serves as a reference for changing the corresponding first count to the third count (Count 1, Count 2, or Count 3). For example, the first time duration (Time 1) serves as the reference for the time duration of the DRM content (DRM_MO) of the first region when reproduced in its entirety, and also as the reference for the sum of the time durations for which only a part of the first region of the DRM content (DRM_MO) is reproduced. The first time duration to the third time duration (Time 1, Time 2, and Time 3), which are reference time durations, can be set to an identical value or different values from the first region to the third region.

According to an exemplary aspect of the present invention, when the reproduction time duration of the entire DRM content, or the sum of the partial reproduction time durations of the DRM content (DRM_MO), is equal to or greater than the corresponding first time duration to the third time duration (Time 1, Time 2, or Time 3), the corresponding first count to the third count (Count 1, Count 2, or Count 3) is changed, i.e. reduced or increased. In the scheme of changing the first count to the third count (Count 1, Count 2, and Count 3), as a number of reproduction times initially specified by a license is gradually reduced through reproduction of the DRM content and becomes 0, then this count is determined as a time point of the license renewal and it is not allowed any more to reproduce the corresponding region of the DRM content (DRM_MO).

Alternately, according to the present invention, as the respective counts of the regions gradually increase through reproduction of the DRM content and become equal to or greater than a number of reproduction times specified by a license, then this count is determined as a point of the license renewal and no more reproductions of the corresponding region of the DRM content (DRM_MO) is permitted. The number of times of reproduction specified by the license for the first to the third regions can be set to identical or different values according to a manufacturer, seller, provider and the like. That is, if the reproduction ratio of the first region is equal to or greater than that of the remaining regions, the permitted value of the first count (Count 1) of the first region can be specified by the license as greater than the permitted values of the second count (Count 2) and the third count (Count 3) as a service for the user, or the permitted values of the first count to the third count (Count 1, Count 2, and Count 3) can be set identically.

Still referring to FIG. 3, the used time duration (Used Time) refers to the accumulated reproduction time duration of the DRM content (DRM_MO). For example, when the accumulated time duration for a region (Used Time 1, Used Time 2, and Used Time 3) is equal to or greater than the first time duration to the third time duration of the corresponding region (Time 1, Time 2, or Time 3), the corresponding first count to the third count (Count 1, Count 2, or Count 3) is changed, and is typically initialized during reproduction of the DRM content (DRM_MO) and then maintains the state. The used time duration relates to the reference first time duration to the third time duration (Time 1, Time 2, and Time 3) to prevent unlimited repetition of a part of the DRM content (DRM_MO). For example, if a user of the portable terminal 300 reproduces the first region and finishes reproduction after a time duration of less than the first time duration (Time 1), e.g. 30 seconds, the license (DRM_RO) saves the used time duration. If the first region is reproduced again later, the previously stored used time duration and the currently reproducing used time duration are accumulated. When the accumulated value of the used time duration is equal to or greater than the first time duration (Time 1), the value of the first count (Count 1) is increased so that the unlimited repetition of the first region is prevented.

Referring now to FIG. 4, an exemplary method for enhancing the DRM authority content having the license topology according to an exemplary embodiment of the present invention will now be described with reference to FIG. 4.FIG. 4 is a flowchart illustrating a method of enhancing a DRM authority content based on the used time duration in the license topology of the DRM content.

Referring to FIG. 4, in the method of enhancing the DRM authority content according to the exemplary embodiment of the present invention, firstly the DRM content (DRM_MO) is reproduced (S101).

Next, it is checked whether the current reproduction time duration (T) of the DRM content (DRM_MO) of the first region is equal to or greater than the first time duration (Time 1) (S102).

If the current reproduction time duration (T) of the first region is less than the first time duration (Time 1) in step S102, a previously stored first used time duration and the current reproduction time duration of the first region are accumulated (S103).

Thereafter, according to this particular example, it is checked whether the accumulated first used time duration (Used Time 1) is equal to or greater than the first time duration (Time 1) (S104).

At step (S104), if the accumulated first used time duration (Used Time 1) is less than the first time duration (Time 1), the accumulated first used time duration (Used Time 1) is stored (S105).

Meanwhile, if the accumulated first used time duration (Used Time 1) is equal to or greater than the first time duration (Time 1) in step S104, then the first count (Count 1) of the first region is changed (S106).

Additionally, if the current reproduction time duration (T) of the first region is equal to or greater than the first time duration (Time 1) in step S102, the process proceeds to step S106 in which the first count (Count 1) of the first region is changed.

Still referring to FIG. 4, next, it is checked whether the current reproduction time duration (T) of the DRM content (DRM_MO) of the second region is equal to or greater than the second time duration (Time 2) (S107). If the current reproduction time duration (T) of the second region is less than the second time duration (Time 2) in step S107, a previously stored second used time duration and the current reproduction time duration of the second region are accumulated (S108). After accumulation at (S108), it is checked at (S 109) whether the accumulated second used time duration (Used Time 2) is equal to or greater than the second time duration (Time 2) (S109).

If the accumulated second used time duration (Used Time 2) is less than the second time duration (Time 2), then the accumulated second used time duration (Used Time 2) is stored (S 110).

Meanwhile, if the accumulated second used time duration (Used Time 2) is equal to or greater than the second time duration (Time 2) in step S 109, the second count (Count 2) of the second region is changed (S111).

In addition, if the current reproduction time duration (T) of the second region is equal to or greater than the second time duration (Time 2) in step S107, the process proceeds to step S111, wherein the second count (Count 2) of the second region is changed.

Next, at (S112), it is checked whether the current reproduction time duration (T) of the DRM content (DRM_MO) of the third region is equal to or greater than the third time duration (Time 3) (S112).

If the current reproduction time duration (T) of the third region is less than the third time duration (Time 3) in step S112, a previously stored third used time duration and the current reproduction time duration of the third region are accumulated (S113).

Thereafter, at (S 114) it is checked whether the accumulated third used time duration (Used Time 3) is equal to or greater than the third time duration (Time 3).

At (S115_ if the accumulated third used time duration (Used Time 3) is less than the third time duration (Time 3) in step S 114, the accumulated third used time duration (Used Time 3) is stored.

Meanwhile, if the accumulated third used time duration (Used Time 3) is equal to or greater than the third time duration (Time 3) in step S 114, the third count (Count 3) of the third region is changed (S116).Also, if the current reproduction time duration (T) of the third region is equal to or greater than the third time duration (Time 3) in step S112, the process proceeds to step S 116 in which the third count (Count 3) of the third region is changed

As such, by the exemplary license (DRM_RO) of the DRM content (DRM_MO) according to the exemplary embodiment of the present invention, it is possible to detect a reproduction of a part of the entire DRM content (DRM_MO) and count a number of times of reproduction of the part based on the used time duration, thereby determining whether to permit repetition of the detected part in such a manner that an unlimited repetition of the part of the DRM content (DRM_MO) can be prevented.

FIG. 5 is a block diagram illustrating an exemplary configuration of the portable terminal 300 using an enhanced DRM authority content (DRM_MO) according to another exemplary embodiment of the present invention. A person of ordinary skill in the art will appreciate that there are other configurations within the spirit and scope of the invention.

Now referring to FIG. 5, the portable terminal 300 according to an exemplary embodiment of the present invention typically includes a Radio Frequency (RF) unit 320, a key input unit 310, a memory 370, a display unit 350, an audio processor 340 and a controller 360.

The RF unit 320 wirelessly transmits a user's data, for example, to another external portable terminal or the like, and performs a set of communications relating to transmitting and receiving content and for controlling signals related to the content through a linkage with an external web server or the like. The RF unit 320 includes an RF transmitting unit for up-converting the frequency of a signal to be transmitted and amplifying the signal, and an RF receiving unit for low noise-amplifying a received signal and down-converting the frequency.

In particular, according to this exemplary configuration, in order to receive the DRM content (DRM_MO) and the license (DRM_RO) from the DRM content server 100, the RF unit 320 can establish a communication channel with, for example, a mobile communication system 200 and can establish a communication channel with the content providing server 110 by using a WAP or a web protocol.

Still referring to FIG. 5, the key input unit 310 is typically provided with alphanumeric keys for inputting alphanumeric characters and function keys for setting various functions. The function keys may include direction keys, side keys and short cut keys or the like set for performing a specific function. The key input unit 310 outputs a key signal input by a user relating to the user's setting and to the function control of the portable terminal 300 to the controller 360.

Moreover, the key input unit 310 receives from the user a key signal for reproducing the DRM content (DRM_MO) and a key signal of a control event signal corresponding to the reproduction of the DRM content (DRM_MO), e.g. pause, stop, fast forward (FF), rewind (REW), and record, and outputs the key signals to the controller 360.

The memory 370 stores an application program necessary for functional operations, the downloaded DRM content (DRM_MO) and license (DRM_RO), and user's data generated by the user, and performs buffering up to the predetermined storage size of the received DRM content (DRM_MO) transmitted in real time according to a streaming service. The memory 370 generally includes a program region and a data region.

For example, still referring to FIG. 5, the program region stores an Operating System (OS) for booting the portable terminal 300, an application program for reproducing multimedia content, and an application program for performing other options of the portable terminal 300, e.g. functions of a camera, sound play, image and moving picture play. When activating functions corresponding to the user's request, the portable terminal 300 provides the functions using the corresponding application program under the control of the controller 360.

The data region stores the data generated by use of the portable terminal 300, and can store the DRM content (DRM_MO) and the license (DRM_RO), which can be downloaded through the DRM content server 100 or the like, user data relating to functions of various options, e.g. a camera function for image or moving picture photography, phonebook data, audio data and corresponding content, information corresponding to the user's data, or the like.

Still referring to the exemplary configuration in FIG. 5, the display unit 350 displays various items of a menu of the portable terminal 300, and information input by the user and provided to the user. In particular, when the DRM content (DRM_MO) includes a video file, the display unit 350 displays the DRM content (DRM_MO) of the download scheme or the streaming scheme requested by the user. The display unit 350 may include a Liquid Crystal Display (LCD), and if the LCD has a touch screen, the display unit 350 may function as an input unit.

The audio processor 340 reproduces an audio signal received from the controller 360 during reproduction of the DRM content (DRM_MO), or typically outputs an audio signal, such as voice, input through a microphone to the controller 360.

The controller 360 typically controls the general operations of the portable terminal 300 and the signal flow between internal units of the portable terminal 300. The controller 360 may include a modem and codec.

The controller 360 typically downloads the external license (DRM_RO) limiting the DRM content (DRM_MO) and the number of reproduction times or reproduction time duration of the DRM content (DRM_MO) by using the RF unit 320, and stores the license (DRM_RO) in the memory 370. Further, the controller 360 reproduces the DRM content (DRM_MO) stored in the memory 370 for the specific reproduction time duration and number of reproduction times according to the license (DRM_RO). The controller 360 controls reproduction by activating the division region of the DRM content for the number of reproduction times of the content that is valid according to the license (DRM_RO). That is, from among the division regions of the DRM content, the controller 360 does not further reproduce a division region that has already been reproduced the total number of reproduction times equal to the permitted count value, and reproduces a division region having a valid count value.

The change of the license based on the usage of the DRM content of the portable terminal according to an exemplary embodiment of the present invention will now be described with reference to FIG. 6. FIG. 6 is a flowchart illustrating a method of using an enhanced DRM authority content in a portable terminal according to an exemplary embodiment of the present invention. A person of ordinary skill in the art understands and appreciates that the present invention is not limited to the examples disclosed herein.

In the exemplary method of using an enhanced the DRM authority content in the portable terminal illustrated in FIG. 6, it is assumed that the DRM content typically has an entire content region that is divided into a plurality of regions capable of being reproduced independently, in this exemplary embodiment, a first division region to an n^{th} division region, where n is a natural number. Referring to FIG. 6, first, the controller 360 downloads and stores the external DRM content (DRM_MO) and the license (DRM_RO) (S201).

The DRM content (DRM_MO) may include various contents, such as an audio file including a music file capable of being reproduced in the portable terminal 300, video file, game file, image file, and the like.

The license (DRM_RO) limits the number of reproduction times of the DRM content or the reproduction time duration. In this exemplary embodiment of the present invention, the license is assumed to limit the number of reproduction times of the DRM content (DRM_MO). That is, the license (DRM_RO) counts the number of reproduction times of the DRM content (DRM_MO) and sets the authority of preventing reproduction equal to or greater than the designated number of times.

Next, at (S202), the controller 360 reads the stored DRM content (DRM_MO) and the license (DRM_RO) from the memory 370 and activates reproduction of the DRM content.

The controller 360 may then check whether the license (DRM_RO) of the reproduction regions of the DRM content (DRM_MO) is valid, and if valid, it controls to display a data value of the corresponding reproduction region in the display unit 350.

In more detail, based on the license (DRM_RO), the controller 360 checks whether the current reproduction time duration (T) of the first region is equal to or greater than the first time duration (Time 1), which serves as a reference time duration for the first region (S203).

Still referring to the flowchart in FIG. 6, if the current reproduction time duration (T) of the first region is less than the first time duration (Time 1) in step S203, a previously stored first used time duration of reproduction of the DRM content in the first region and the current first reproduction time duration of the currently reproducing DRM content are accumulated (S204).

Thereafter, at (S205) it is checked whether the accumulated first used time duration (Used Time 1) is equal to or greater than the first time duration (Time 1). If the accumulated first used time duration (Used Time 1) is less than the first time duration (Time 1) in step S205, the accumulated first used time duration (Used Time 1) is stored (S206).

Meanwhile, at (S207) if the accumulated first used time duration (Used Time 1) is equal to or greater than the first time duration (Time 1) in step S205, the first count (Count 1) is then changed. Here, based on the license (DRM_RO), the controller 360 can increase the first count (Count 1) and then initialize the first used time duration (Used Time 1).

Also, if the current reproduction time duration (T) of the first region is equal to or greater than the first time duration (Time 1) in step S203, step S207 is then performed.

At (S208), the license (DRM_RO) then checks whether the value of the first count (Count 1) is equal to the limitation value within which the first region is allowed to be reproduced, i.e. the total permitted number of reproduction times.

According to this exemplary aspect of the present invention, at (S209), if the value of the first count (Count 1) is equal to the total permitted number of reproduction times in step S208, further reproduction of the first region is prevented.

In the same manner, based on the license (DRM_RO), the controller 360 checks whether the current reproduction time duration (T) for the n^{th} region is equal to or greater than the n^{th} time duration (Time n) for the n^{th} region (S210).

At (S211), then, if the n^{th} reproduction time duration (T) is less than the n^{th} time duration (Time n) in step S210, the previously stored n^{th} used time duration of reproduction of the DRM content in the n^{th} region and the current n^{th} reproduction time duration of the currently reproducing DRM content are accumulated.

Thereafter, it is checked whether the accumulated n^{th} used time duration (Used Time n) is equal to or greater than the n^{th} time duration (Time n) (S212).

If the accumulated n^{th} used time duration (Used Time n) is less than the n^{th} time duration (Time n) in step S210, the accumulated n^{th} used time duration (Used Time n) is stored (S213).

Meanwhile, if the accumulated n^{th} used time duration (Used Time n) is equal to or greater than the n^{th} time duration (Time n) in step S212, the n^{th} count (Count n) is then changed (S214).

Here, based on the license (DRM_RO), the controller 360 can increase the n^{th} count (Count n) and then initialize the n^{th} used time duration (Used Time n).Also, if the current reproduction time duration (T) is equal to or greater than the n^{th} time duration (Time n) in step S210, step S214 is performed.

The license (DRM_RO) checks whether the value of the n^{th} count (Count n) is equal to the limitation value within which the n^{th} region is allowed to be reproduced, i.e. the total permitted number of reproduction times (S215).

If the value of the n^{th} count (Count n) is equal to the total permitted number of reproduction times in step S215, further reproduction of the n^{th} region is prevented (S216).

The controller 360 continues to check whether the license (DRM_RO) for the reproduction regions of the DRM content (DRM_MO) is valid or not. When the license (DRM_RO) is no longer valid for a region, the controller 360 prevents reproduction of the particular region, and checks whether the license (DRM_RO) is valid for a region other than the checked region. When the license (DRM_RO) of all regions becomes invalid for all regions, the controller terminates the checking.

In addition, in the present invention, the DRM authority, typically via the controller, may optionally a notification that a maximum number of reproductions has been reached. Further, the DRM authority, typically via the controller, may provides a prompt to permit contact with a license server to obtain at least one of a new or renewed license (DRM_RO)_so as to reset the maximum number of reproductions.

As described above, the method for enhancing the DRM authority, enhanced DRM authority content, and the portable terminal using the same according to the present invention will prevent a user from unlimited repeat reproduction of a content shorter than a certain time duration of the content.

Although exemplary embodiments of the present invention have been described for illustrative purposes, those skilled in the art will appreciate that various modifications, additions and substitutions are possible, without departing from the spirit of the invention and the scope of the appended claims. Therefore, the embodiments described above should be understood as being illustrative and not restrictive in all aspects as the invention is broader than the examples and illustrations provided herein. For example, while the term such as "permitted number" and maximum number of the count is disclosed, there are a variety of ways that the maximum number can be reached, such as decrementing a count, etc. The invention is not limited to incrementing or decrementing counts, and there are other ways that the count can be determined that does not depart from the scope of the appended claims. Also, the DRM authority may comprise a module separate from a module comprising the DRM content, or both may be, for example, sub-modules of a module containing content and access/reproduction authority.

## Claims

1. A method for enhancing a Digital Rights Management (DRM) authority, the method comprising:
(a) permitting by the DRM authority a reproduction of a DRM content having a first division region to an n^{th} division region, where n is a natural number;
(b) changing a first count value to an n^{th} count value according to the reproduction of the DRM content permitted in step (a), wherein each of the first count value to the n^{th} count value has a maximum number of reproduction times in order to limit a number of times by which reproduction is permitted for a corresponding division region; and
(c) preventing reproduction of the corresponding division region when a corresponding count value of the corresponding division region from among the first count value to the n^{th} count value is equal to the maximum number of reproduction times.

2. The method of claim 1, wherein the changing of a first count value to an n^{th} count value in step (b) comprises:
(i) changing a corresponding count value of a previous division region which has been reproduced more than a reproduction time duration for the previous division region of the DRM content;
(ii) checking whether a current reproduction usage time duration of a currently reproduced division region is equal to or greater than a preset reference time duration for the currently reproduced division region;
(iii) obtaining an accumulated current usage time duration by adding the current reproduction usage time duration to at least one previous usage time duration, during which the corresponding division region has been reproduced shorter than the preset reference time duration, if the current reproduction usage time duration is less than the preset reference time duration;
(iv) checking whether the accumulated current usage time duration is equal to or greater than the preset reference time duration; and
(v) changing, if the accumulated current usage time duration is equal to or greater than the preset reference time duration, a count value of the corresponding division region.

3. The method of claim 2, wherein step (v) further comprises storing, if the accumulated current usage time duration is less than the preset reference time duration, the accumulated current usage time duration.

4. The method of claim 2, wherein at least one of the first count value to the n^{th} count value has a different maximum number of reproduction times than a maximum number of reproduction times of another count value.

5. The method of claim 2, wherein at least one preset reference time duration has a different preset value from that of another reference time duration according to the division regions.

6. The method of claim 2, wherein, if the accumulated current usage time duration is equal to or greater than the preset reference time duration, the accumulated current usage time duration is initialized.

7. The method of claim 1, wherein in step (c) the DRM authority sends a notification that a maximum number of reproduction times has been reached.

8. The method of claim 7, wherein the DRM authority provides a prompt to permit contact with a license server to obtain at least one of a new or renewed license so as to reset the maximum number of reproduction times.

9. The method of claim 7, wherein the DRM authority sends a warning notification after a predetermined number of reproductions has been reached that is less than the maximum number of reproduction times.

10. The method of claim 2, wherein in step (c) the DRM authority sends a notification that a maximum number of reproduction times has been reached.

11. The method of claim 10, wherein the DRM authority provides a prompt to permit contact with a license server to obtain at least one of a new or renewed license so as to reset the maximum number of reproduction times.

12. The method of claim 11, wherein the DRM authority sends a warning notification after a predetermined number of reproductions has been reached that is less than the maximum number of reproduction times.

13. The method according to claim 1, wherein the DRM content in step (a) includes an offset within each of the first division region to an n^{th} division region by indicating the maximum number of reproduction time per respective division region.

14. An enhanced DRM authority content module comprising:
a DRM content module comprising DRM content divided into a first division region to an n^{th} division region, where n is a natural number; and
a license module permitting access of the DRM content and for limiting a number of reproduction times of the DRM content,
wherein the license comprises:
a first count value to an n^{th} count value having a first permitted number of reproduction times to an n^{th} permitted number of reproduction times, which designates the number of times up to which the first division region to the n^{th} division region of the DRM content can be reproduced, respectively;
a first reference time duration to an n^{th} reference time duration serving as reference values for a reproduction time duration in order to change the first count value to the n^{th} count value for the first division region to the n^{th} division region of the DRM content, respectively; and
a first usage time duration to an n^{th} usage time duration increasing a corresponding count if an accumulated usage time duration obtained by accumulating each reproduction time duration for which the first division region to the n^{th} division region of the DRM content are partially reproduced less than the reference time duration is equal to or greater than the reference time duration.

15. The DRM authority content of claim 14, wherein at least one of the first count value to the n^{th} count value has a different permitted number of reproduction times from a permitted number of reproduction times of another count value.

16. The DRM authority content of claim 14, wherein, if the first used time duration to the n^{th} used time duration is equal to or greater than the corresponding reference time duration, the count of the corresponding division region is changed and the corresponding used time duration is initialized.

17. The DRM authority content of claim 14, wherein the DRM authority permits an output of the DRM content of one division region when the permitted number of reproduction times is less than or equal to the count value for the respective division region.

18. The DRM authority content of claim 14, wherein the DRM authority provides an output message indicating that the permitted number of reproduction times has been reached for at least one division region.

19. An enhanced DRM authority content system comprising:
a DRM content module divided into a first division region to an n^{th} division region, where n is a natural number; and
a license means for limiting a number of reproduction times of the DRM content,
wherein the license module comprises:
a first count value to an n^{th} count value having a first permitted number of reproduction times to an n^{th} permitted number of reproduction times, which designate the number of times up to which the first division region to the n^{th} division region of the DRM content can be reproduced, respectively; and
a first reference time duration to an n^{th} reference time duration serving as reference values for reproduction time duration in order to change the first count value to the n^{th} count value for the first division region to the n^{th} division region of the DRM content, respectively; and
said license means restricts reproduction of the DRM content after a permitted number of reproduction times has been reached.

20. The system according to claim 19, wherein said license means comprises a decoding key for decoding an encryption of the DRM content.

21. An enhanced DRM authority content system comprising:
a DRM content module having a first division region to an n^{th} division region; and
a license means for providing a decoding key for decoding an encryption of the DRM content and for limiting a number of reproduction times up to which the first division region to the n^{th} division region of the DRM content can be reproduced.

22. A portable terminal comprising:
a radio frequency unit for receiving a DRM content having a first division region to an n^{th} division region, where n is a natural number, and a license limiting a number of reproduction times of the DRM content from an external;
a key input unit for generating a key signal for receiving and reproducing the DRM content;
a memory for storing the DRM content and the license;
a display unit for displaying an image and an audio processor for reproducing an audio signal according to reproduction of the DRM content; and
a controller for controlling reproduction of the DRM content by activating a division region of the DRM content for which the number of reproduction times of the content is less than a permitted number of reproduction times based on the license.

23. The portable terminal of claim 22, wherein the license comprises:
a first count value to an n^{th} count value having a first permitted number of reproduction times to an n^{th} permitted number of reproduction times, which designates the number of times up to which the first division region to the n^{th} division region of the DRM content can be reproduced, respectively;
a first reference time duration to an n^{th} reference time duration serving as reference values for a reproduction time duration in order to change the first count value to the n^{th} count value for the first division region to the n^{th} division region of the DRM content, respectively; and
a first used time duration to an n^{th} used time duration increasing a corresponding count if an accumulated used time duration obtained by accumulating the reproduction time durations for which the first division region to the n^{th} division region of the DRM content are partially reproduced less than the reference time duration is equal to or greater than the reference time duration.

24. The portable terminal of claim 23, wherein at least one of the first count value to the n^{th} count value has a different permitted number of reproduction times from a permitted number of reproduction times of another count value.

25. The portable terminal of claim 23, wherein, if the first used time duration to the n^{th} used time duration is equal to or greater than the corresponding reference time duration, the count of the corresponding division region is changed and the corresponding used time duration is initialized.
